# EUROPÄISCHE PATENTSCHRIFT

(11) **EP 1 064 475 B1**
(45) Veröffentlichungstag und Bekanntmachung des Hinweises auf die Patenterteilung: **12.06.2002**
(21) Anmeldenummer: 99924697.8
(22) Anmeldetag: 26.03.1999
(51) Int. Cl.: F16H 1/00, F16H 25/24

(54) **SCHRAUBENGETRIEBE**
HELICAL GEAR
ENGRENAGE HELICOIDAL

(30) Priorität: 27.03.1998 DE 19813637
(43) Veröffentlichungstag der Anmeldung: 03.01.2001
(73) Patentinhaber: Leica Camera Aktiengesellschaft, 35606 Solms bei Wetzlar (DE)
(72) Erfinder: KRANZ, Gerhard, D-35576 Wetzlar (DE); CREMA, Rolf, D-35630 Ehringshausen (DE); SCHMIDT, Peter, D-35625 Hüttenberg (DE)
(74) Vertreter: Stamer, Harald
(86) Internationale Anmeldenummer: DE9900923
(87) Internationale Veröffentlichungsnummer: WO9950571

(56) Entgegenhaltungen:
- US-A- 5 127 285
- US-A- 5 331 861
- US-A- 5 392 662
- US-A- 5 644 951

## Beschreibung

Die Erfindung betrifft ein Schraubengetriebe mit einer in axialer Richtung festgelegten Spindel mit Spindelachse und einer mit einem anzutreibenden, in axialer Richtung geführten Schlitten verbundenen Spindelmutter, wobei zwischen der Spindelmutter und dem Schlitten ein Gelenk zum Ausgleich von relativen Querbewegungen und Kippungen zwischen Spindelmutter und Schlitten vorgesehen ist, das zur Spindelachse symmetrisch ausgebildet ist und zwei senkrecht zueinander stehende Gelenkachsen aufweist, die sich auf der Spindelachse kreuzen und einerseits der Querbewegung einer mit der Spindelmutter verbundenen Anlageplatte und andererseits der Querbewegung einer mit dem Schlitten verbundenen Anlageplatte zugeordnet sind und das eine Zwischenplatte enthält, über die die Anlageplatten zum Ausgleich einer Kippung ihrer Gelenkachsen schwenkbar miteinander verbunden sind.

Schraubengetriebe dieser Art sind bekannt und beispielsweise in der US-A-5392662 oder in dem Lehrbuch "Konstruktionselemente der Feinmechanik", Herausgeber Werner Krause, Verlag Hanser (1989), Seiten 709 ff. beschrieben. Die Spindel ist drehbar, verschiebt sich aber nicht in axialer Richtung. Die Spindelmutter ist parallel zur Achse der Spindet in einer Längsführung gehalten und damit nicht drehbar. Die Drehung der Spindel wird daher in eine Schubbewegung der Spindelmutter umgesetzt. Mit der Spindelmutter ist der anzutreibende Objektträger verbunden.

Mit Schraubengetrieben können durch die Wahl ausreichend langer Spindeln Antriebe über sehr lange Verschiebewege realisiert werden. An die Qualität des Gewindes der Spindel brauchen im allgemeinen keine hohen Anforderungen gestellt zu werden, obwohl z.B. gehärtete Spindeln mit einem geschliffenen Gewinde für hohe Ganggenauigkeiten zu bevorzugen sind. Ein Spiel zwischen den Gewinden der Spindelmutter und der Spindel kann durch gegeneinander gefederte Teilung der Spindelmutter ausgeglichen werden. Die Achsen langer Spindeln sind im allgemeinen nicht exakt linear. Sie können insbesondere bei dünnen Spindeln entweder leicht gebogen oder sogar gewellt sein. Da sie nur in ihren Endbereichen gelagert sind, führt die Spindelmutter entlang ihres Verschiebeweges daher geringe Auf- und Ab-, sowie Seitwärtsbewegungen aus. Ein solcher Schlag im Rundlauf der Spindel entsteht auch, wenn die Achse eines antreibenden Motors und die Spindelachse nicht miteinander fluchten.

Wenn andererseits die axiale Führung des Schlittens die Verschiebebahn in der Höhe und Seite festlegt, kommt es insbesondere bei sehr präzisen Schlittenführungen zu Verspannungen zwischen der angetriebenen Mutter und dem Schlitten. Diese werden noch verstärkt, wenn die Lager der Spindel nicht für eine Ausrichtung exakt parallel zu der Verschiebebahn angeordnet sind. Solche Verspannungen beeinträchtigen die Laufeigenschaften und die Positioniergenauigkeit des Schlittens erheblich.

Aus der US 5 392 662 ist ein Schraubengetriebe bekannt, bei dem die vorgenannten Fehlereinflüsse durch ein zwischen Spindelmutter und Schlitten eingefügtes Gelenk ausgeglichen werden. Das Gelenk besteht aus einer mit der Spindelmutter verbundenen Andruckplatte, einer Zwischenplatte und einer mit dem Schlitten verbundenen Andruckplatte. Jede der Anlageplatten ist über zwei Federbügel mit der Zwischenplatte verbunden. Die beiden Federbügel einer Anlageplatte liegen parallel zueinander auf gegenüberliegenden Seiten der Spindelachse, wobei die beiden Federbügelpaare senkrecht zueinander angeordnet sind. Die Federbügel sind an den Anlageplatten mit ihrer Kuppe und an der Zwischenplatte mit ihren Fußteilen befestigt. Jede der Anlageplatten ist dadurch bezüglich einer Querbewegung von einem Federparallelogramm geführt und bezüglich einer Kippung um eine Achse drehbar. Das Gelenk ist symmetrisch zur Spindelachse ausgelegt und enthält eine kraftschlüssige Verbindung zwischen antreibendem und angetriebenem System. Eine Stauchung oder Verwindung der Federbügel bei einem Widerstand zwischen Spindelantrieb und Schlittenführung oder bei höheren Antriebsfrequenzen kann dabei nicht ausgeschlossen werden. Die Auslenkung der Federbügel bei der Querbewegung erzeugt eine mit der Auslenkung steigende Kraftrückwirkung auf die Spindel.

Der Erfindung lag daher die Aufgabe zugrunde, ein Schraubengetriebe einfacher Bauart zu realisieren, bei dem fertigungs- und bauartbedingte Toleranzen in der Geradheit der Spindel und der Ausrichtung ihrer Lager zu der Schlittenführung keine negativen Einflüsse auf die Schlittenführung haben.

Diese Aufgabe wird bei einem Schraubengetriebe der eingangs genannten Art erfindungsgemäß dadurch gelöst, daß die Gelenkachsen jeweils durch zwei fluchtend zueinander auf gegenüberliegenden Seiten der Spindelachse angeordnete Kugeln gebildet werden, die in einander gegenüberliegenden Prismennuten In den Anlageplatten und der Zwischenplatte gelagert sind, und daß die Kugeln und die Platten unter Federdruck aneinander liegen.

Vorteilhafte Ausgestaltungen ergeben sich aus den Merkmalen der Unteransprüche.

Durch die Zwischenschaltung des erfindungsgemäß ausgestalteten Gelenkes kann die Spindelmutter alle notwendigen Ausgleichsbewegungen gegenüber dem Schlitten bei ausschließlich rollender Auslenkung und Kippung mit geringsten Reibungskräften ausführen. Das durch formschlüssige Anlage der Gelenkelemente in Antriebsrichtung spielfreie und drehgesicherte Gelenk sorgt dafür, daß die Positioniergenauigkeit des Antriebs bei Bewegungsumkehr nicht beeinflußt wird.

Als Lager der Kugeln dienen einander gegenüberliegende Prismennuten, die in ihrer Längsausdehnung begrenzt sein können. Die in Prismennuten liegenden Kugeln führen translatorische Ausgleichsbewegungen und Kippungen bei geringsten Reibungskräften aus.

Zweckmäßigerweise sind die Prismennuten beidseitig offen, wobei sie in dem Werkstück in einem Arbeitsgang durchgefräst werden können. Die Kugeln sind dann in einem besonderen Käfig gegen seitliches Auswandern zu sichem. Der Käfig oder die Kugeln im Käfig sollen den Ausgleichsbewegungen folgen können.

Der Käfig kann als dünne Scheibe ausgebildet sein, die zur Aufnahme der Kugeln quer zur Richtung der Prismennuten liegende Langlöcher aufweist und beidseitig Zentrierränder mit einer Nase zur Verdrehsicherung enthält, die in die Bohrungen der einander gegenüberliegenden Anlage- und Zwischenplatte eingreifen, wobei zumindest der Zentrierrand in der Bohrung der Zwischenplatte mit radialem Spiel einliegt

Die Herstellung sehr genau fluchtender Prismennuten als Kugelbahnen mit hoher Oberflächenqualität ist nur bei durchgehenden, seitlich offenen Bahnen kostengünstig möglich. Damit werden insbesondere auch für die Positioniergenauigkeit der Kugeln ungünstige Auflaufschrägen am Ende von getrennt eingefrästen Kugelbahnen vermieden.

Der Vorteil durchlaufender Prismennuten ohne die Notwendigkeit der Einfügung eines Käfigs kann dadurch realisiert werden, daß die eine der einander gegenüberliegenden Platten eine die Spindelachse kreuzende lineare Prismennut und die andere zwei lineare, von der Spindelachse entfernt verlaufende Prismennuten aufweist, die senkrecht zu der die Spindelachse kreuzenden Prismennut vertaufen. Die Kugel liegt jeweils im Kreuzungspunkt der Prismennuten.

Ausführungsbeispiele des erfindungsgemäßen Schraubengetriebes sind in der Zeichnung schematisch dargestellt und werden nachfolgend beschrieben. Dabei zeigen
- Fig.1: eine Gesamtdarstellung des Schraubengetriebes
- Fig.2: eine Schnittdarstellung durch die Spindelmutter mit Gelenk
- Fig.3a-d: eine erste Ausführungsform des Gelenks mit Käfig zur Kugelaufnahme
- Fig. 3e: eine weitere Ausführungsform des Käfigs
- Rg.4a-d: eine zweite Ausführungsform des Gelenks

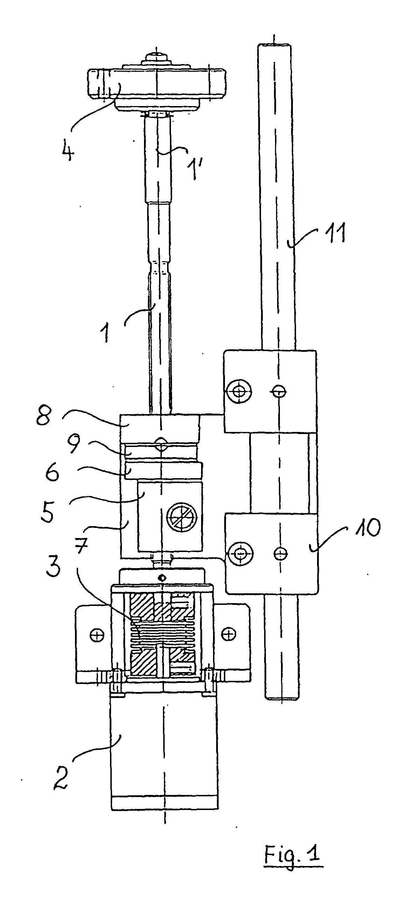

In Fig.1 wird eine Spindel 1 durch einen Schrittmotor 2 angetrieben, der über eine Wellenkupplung 3 mit der Spindel 1 verbunden ist An ihrem anderen Ende läuft die Spindel 1 in einem Kugellager 4. Die Wellenkupplung gleicht etwaige Abweichungen von der Fluchtung zwischen der Spindelachse 1' und der Motorachse aus.

Mit der Spindel 1 gekuppelt ist eine Spindelmutter 5, die eine Anlageplatte 6 besitzt. An einem Schlitten 7 ist eine weitere Anlageplatte 8 befestigt. Zwischen den Anlageplatten 6 und 8 befindet sich eine Zwischenplatte 9, die um zwei später zu beschreibende Achsen kippbar und längs dieser Achsen verschiebbar ist. Der Schlitten 7 ist mit einer vorgespannten, hochgenauen Kugelführung 10 verbunden, die auf einer zylindrischen Stange 11 läuft. Die Lagerböcke der Stange 11, des Kugellagers 4 und des Motors 2 sind nicht dargestellt. Sie sind so ausgerichtet, daß die Spindel 1 und die Stange 11 zueinander parallel sind und in einer Ebene liegen. Es ist anzustreben, daß die Spindel 1 durch den Massenschwerpunkt des Schlittens 7 hindurchgeht, um Kippmomente bei der Antriebsbeschleunigung zu vermeiden. Bei der Verwendung der hochgenauen Kugelführungen 10 für den Schlitten 7 ist dieses Problem jedoch nahezu vemachlässigbar.

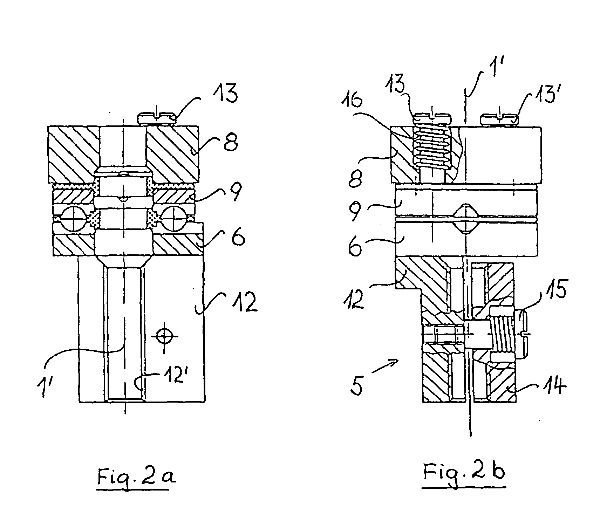

In Fig.2a ist die Spindelmutter 5 in einer Aufsicht auf das Unterteil 12 der Mutter mit einem Schnitt durch das Gelenk dargestellt. An dem Unterteil 12 befindet sich die Anlageplatte 6. Die hier nicht dargestellte Spindel 1 liegt in dem Gewinde 12' des Unterteils 12 und erstreckt sich durch Bohrungen in den Anlageplatten 6 und 8, sowie der Zwischenplatte 9 hindurch, die durch eine Schraube 13 und eine spiegelsymmetrisch zur Spindelachse 1' angeordnete Schraube 13' federnd zusammengehalten werden.

In der um 90° gedrehten Schnittdarstellung durch die Spindelmutter in Fig.2b ist auch das Oberteil 14 der Mutter dargestellt. Es ist durch eine unter Federdruck stehende Schraube 15 mit dem Unterteil 12 verbunden. Die Schraube 13 steht unter dem Druck einer Feder 16. Gleiches gilt für die hier auch angedeutete Schraube 13' mit Feder 16'.

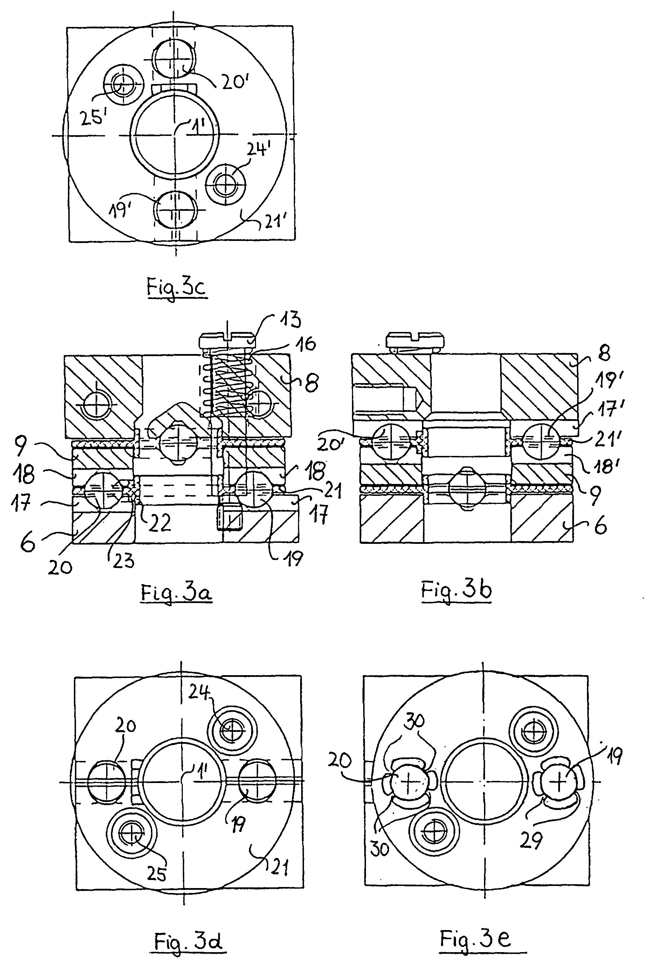

Fig.3a zeigt in einer teilweise aufgeschnittenen Darstellung Einzelheiten des Gelenks. In die Anlageplatte 6 ist eine durchgehende Prismennut 17 eingefräst Eine gleiche Prismennut 18 ist in die Zwischenplatte 9 eingefräst In diesen Prismennuten 17, 18 liegen zwei Kugeln 19, 20, die von einem Käfig 21 gehalten werden. Der Käfig 21 weist beidseitig einen Zentrierrand 22 und eine Nase 23 auf, mit denen er in der zentralen Bohrung in der Anlageplatte 6 und der Zwischenplatte 9 sowie durch Eingriff der Nase 23 in die Nuten 17, 18 verdrehsicher gehalten wird. Die Passung der Zentrierränder ist mit Spiel ausgeführt. Dabei ist es von Vorteil, wenn das Spiel sowohl in der Anlageplatte 6 als auch in der Zwischenplatte 9 vorhanden ist Bei translatorischen Ausgleichsbewegungen längs der Nutrichtung können dann die Kugeln rollen und den Käfig mitnehmen. Die durch Punktanlage der Kugeln im Käfig erzeugten Reibungskräfte sind minimal, insbesondere, wenn für den Käfig ein Kunststoffmaterial mit hohen Gleiteigenschaften gewählt wird. Grundsätzlich ist es jedoch auch ausreichend für die translatorische Relativbewegung, wenn z.B. nur in der Zwischenplatte das Spiel vorhanden ist. Die Kugeln können mit dem Käfig dann exakter zu ihrem Hubmittelpunkt positioniert werden. Wegen der einseitigen Fixierung des Käfigs gleiten die Kugeln dann jedoch bei translatorischen Ausgleichsbewegungen.

Wie aus der um 90° gedrehten Darstellung in Fig.3b zu entnehmen ist, befindet sich ein identischer Aufbau aus Prismennuten 17', 18', Kugeln 19', 20' und Käfig 21' zwischen der Anlageplatte 8 und der anderen Seite der Zwischenplatte 9. Die beiden unter 90° zueinander stehenden Prismennuten auf den beiden Flächen der Zwischenplatte gewährleisten ein translatorisches Ausweichen nach allen Richtungen. Die Zentrierränder 22 dienen auch dazu, eine Begrenzung der Querbewegung zu bewirken, um eine Berührung der Zwischenplatte 9 bzw. der Anlageplatten 6, 8 mit der Spindel 1, den Schrauben 13 und Federn 16 zu verhindern.

Die Fig. 3c und 3d zeigen eine Aufsicht auf die Käfige 21, 21'. Die Löcher zur Aufnahme der Kugeln 19, 20; 19', 20' sind senkrecht zur Richtung der Prismennuten geringfügig gestreckt, so daß nur eine punktförmige Anlage der Kugeln am Käfig im Durchstoßpunkt der Kippachse erfolgt und diese Punktanlage auch bei eventuellen Fluchtungstoleranzen der Löcher zu den Prismennuten bei der Positionierung der Kugeln erhalten bleibt Die jeweilige Gelenkachse ist durch die Verbindungslinie zwischen den Kugelmittelpunkten gegeben, die die Spindelachse 1' schneidet.

Fig. 3e zeigt eine Aufsicht auf eine andere Ausgestaltung der Kugelaufnahme in dem Käfig 21. Die Löcher zur Aufnahme der Kugeln 19, 20 sind hier kreisförmig mit einem größeren Durchmesser ausgeführt. In radialer Richtung sind an die Lochränder gegeneinander gerichtete Federelemente 29, 30 angeformt, die die Kugeln 19, 20 abstützen. Die freien Enden dieser Federelemente 29, 30 liegen außerhalb der Zeichenebene. Der Käfig 21 wird zweckmäßigerweise ohne Spiel zentriert, so daß ein definierter Hubmittelpunkt der Kugeln 19, 20 gegenüber den sie umgebenden Teilen entsteht Bei translatorischen Ausgleichsbewegungen wirken nur die sehr geringen abstützenden Federkräfte in Richtung der Spindel 1 auf die Kugeln, so daß diese in den Nuten nahezu ungehindert rollen können.

Zwei weitere Bohrungen 24, 25; 24', 25' im Käfig dienen als Durchführungen für die zwei spiegelsymmetrisch zueinander angeordnete Schrauben 13, 13' mit Fedem 16, 16', die die Gelenkteile in axialer Richtung spielfrei zusammenhalten. Der Aufbau des Gelenkes aus senkrecht zueinander stehenden Prismennuten mit darin laufenden Kugeln erlaubt ausschließlich translatorische Relativbewegungen. Drehungen sind ausgeschlossen. Der der Spindeldrehung entsprechende Vorschub der Spindelmutter wird daher spielfrei auf den Schlitten übertragen.

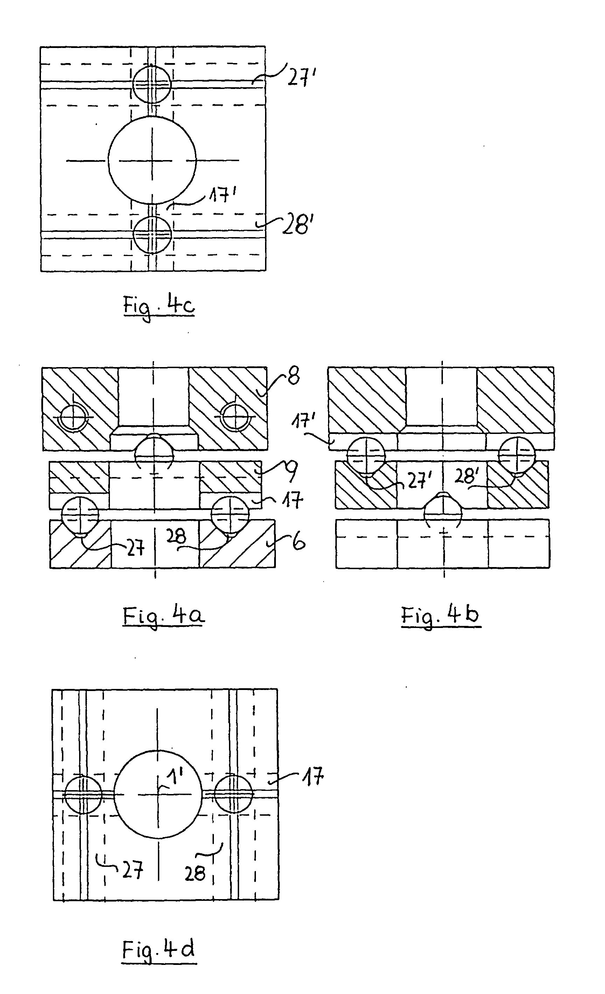

Bei dem in Fig. 4 dargestellten Ausführungsbeispiel wirken je eine lineare Prismennut 17, die die Spindelachse schneidet, und zwei dazu senkrecht verlaufende lineare Prismennuten 27, 28 zusammen, die entfernt von der Spindelachse verlaufen. Hier werden die Kugeln im Kreuzungspunkt der Prismennuten ohne Käfig gehalten. Im dargestellten Ausführungsbeispiel befinden sich die jeweils zwei zueinander parallelen Prismennuten in der oberen Fläche der Zwischenplatte 9 und der Anlageplatte 6, wie aus dem Vergleich der um 90° gedrehten Schnittdarstellungen Fig. 4a und Fig. 4b zu entnehmen ist Die Fig. 4c und 4d zeigen die Kugeln im Kreuzungspunkt der Prismennuten.

## Patentansprüche

1. Schraubengetriebe mit einer in axialer Richtung festgelegten Spindel (1) mit Spindelachse (1') und einer mit einem anzutreibenden, in axialer Richtung geführten Schlitten (7) verbundenen Spindelmutter (5), wobei zwischen der Spindelmutter (5) und dem Schlitten (7) ein Gelenk zum Ausgleich von relativen Querbewegungen und Kippungen zwischen Spindelmutter (5) und Schlitten (7) vorgesehen ist, das zur Spindelachse (1') symmetrisch ausgebildet ist und zwei senkrecht zueinander stehende Gelenkachsen aufweist, die sich auf der Spindelachse (1') kreuzen und einerseits der Querbewegung einer mit der Spindelmutter (5) verbundenen Anlageplatte (6) und andererseits der Querbewegung einer mit dem Schlitten (7) verbundenen Anlageplatte (8) zugeordnet sind und das eine Zwischenplatte (9) enthält, über die die Anlageplatten (6, 8) zum Ausgleich einer Kippung ihrer Gelenkachsen schwenkbar miteinander verbunden sind, **dadurch gekennzeichnet, daß** die Gelenkachsen jeweils durch zwei fluchtend zueinander auf gegenüberliegenden Seiten der Spindelachse (1') angeordnete Kugeln (19, 20; 19', 20') gebildet werden, die in einander gegenüberliegenden Prismennuten (17, 18; 17', 18') in den Anlageplatten (6, 8) und der Zwischenplatte (9) gelagert sind, und daß die Kugeln und die Platten unter Federdruck (13, 16; 13', 16') aneinander liegen.

2. Schraubengetriebe nach Anspruch 1, **dadurch gekennzeichnet, daß** die einander gegenüberliegen Prismennuten (17, 18; 17', 18') gleichgerichtet sind.

3. Schraubengetriebe nach Anspruch 2, **dadurch gekennzeichnet, daß** die Längsausdehnung der Prismennuten (17, 18; 17', 18') für jede Kugel (19, 20; 19', 20') begrenzt ist.

4. Schraubengetriebe nach Anspruch 2, **dadurch gekennzeichnet, daß** beidseitig offene Prismennuten (17, 18; 17', 18') vorgesehen sind und die Kugeln (19, 20; 19', 20') in einem Käfig (21; 21') gegen seitliches Auswandern gesichert sind.

5. Schraubengetriebe nach Anspruch 4, **dadurch gekennzeichnet, daß** der Käfig (21; 21') als dünne Scheibe ausgebildet ist, die senkrecht zur Richtung der Prismennuten ausgerichtete Langlöcher zur Aufnahme der Kugeln (19, 20; 19', 20') aufweist und beidseitig Zentrierränder (22) mit einer Nase (23) zur Verdrehsicherung enthält, die in die Bohrungen der einander gegenüberliegenden Anlage- und Zwischenplatte eingreifen, wobei der Zentrierrand in der Bohrung der Zwischenplatte (9) mit radialem Spiel einliegt.

6. Schraubengetriebe nach Anspruch 4, **dadurch gekennzeichnet, daß** der Käfig (21, 21') als dünne Scheibe ausgebildet ist, die zur Aufnahme der Kugeln (19, 20; 19', 20') kreisförmige Löcher aufweist, deren Durchmesser größer als der Kugeldurchmesser ist, wobei in radialer Richtung gegeneinander gerichtete kurze Federelemente (29, 30; 29', 30') an den Lochrändem angeformt sind, die die Kugeln abstützen, und wobei der Käfig (21, 21') in einer der einander gegenüberliegenden Anlage- oder Zwischenplatte ortsfest gehalten wird.

7. Schraubengetriebe nach Anspruch 5, **dadurch gekennzeichnet, daß** der Käfig (21, 21') so ausgebildet ist, daß seine Zentrierränder (22) eine Begrenzung der Querbewegung bewirken, um eine Berührung der Zwischenplatte (9) bzw. der Anlageplatten (6, 8) mit der Spindel (1) und den Federdruckelementen (13, 16; 13', 16') zu verhindern.

8. Schraubengetriebe nach Anspruch 5, **dadurch gekennzeichnet, daß** die Breite des Langlochs dem Kugeldurchmesser angepaßt ist und in radialer Richtung eine punktförmige Anlage der Kugeln (19, 20; 19', 20') erzeugt

9. Schraubengetriebe nach Anspruch 4, **dadurch gekennzeichnet, daß** der Käfig (21, 21') aus einem Kunststoffmaterial mit hohen Gleiteigenschaften gefertigt ist.

10. Schraubengetriebe nach Anspruch 1, **dadurch gekennzeichnet, daß** zur Lagerung der Kugeln die eine der einander gegenüberliegenden Platten eine die Spindelachse kreuzende lineare Prismennut (17, 17') und die andere zwei dazu senkrecht verlaufende, von der Spindelachse entfernt verlaufende lineare Prismennuten (27, 28; 27', 28') aufweist

## Claims

1. Screw gear with a spindle (1), which is fixed in axial direction, with a spindle axis (1') and a spindle nut (5) connected with a carriage (7) which is to be driven and is guided in axial direction, wherein provided between the spindle nut (5) and the carriage (7) is a joint for compensation for relative transverse movements and tiltings between spindle nut (5) and carriage (7), which joint is constructed symmetrically relative to the spindle axis (1') and has two mutually perpendicular joint axes which intersect on the spindle axis (1') and are associated on the one hand with the transverse movement of a support plate (6) connected with the spindle nut (5) and on the other hand with the transverse movement of a support plate (8) connected with the carriage (7) and contain an intermediate plate (9), by way of which the support plates (6, 8) are pivotably connected together for compensation for a tilting of their joint axes, **characterised in that** the joint axes are each formed by two mutually aligned balls (19, 20; 19', 20') which are arranged on opposite sides of the spindle axis (1') and which are mounted in mutually opposite prismatic grooves (17, 18'; 17', 18') in the support plates (6, 8) and the intermediate plate (9) and that the balls and the plates bear against one another under spring pressure (13, 16; 13', 16').

2. Screw gear according to claim 1, **characterised in that** the mutually opposite prismatic grooves (17, 18; 17', 18') are axially parallel.

3. Screw gear according to claim 2, **characterised in that** the longitudinal extent of the prismatic grooves (17, 18; 17', 18') for each ball (19, 20; 19', 20') is limited.

4. Screw gear according to claim 2, **characterised in that** prismatic grooves (17, 18; 17', 18') open at both sides are provided and the balls (19, 20' 19', 20') are secured in a cage (21; 21') against lateral drift.

5. Screw gear according to claim 4, **characterised in that** the cage (21; 21') is constructed as a thin disc which has slots, which are oriented perpendicularly to the direction of the prismatic grooves, for reception of the balls (19, 20; 19', 20') and contains at both sides centring edges (22) with a nose (23) for rotational securing, which engage in the bores of the mutually opposite support and intermediate plates, wherein the centring edge lies in the bore of the intermediate plate (9) with radial play.

6. Screw gear according to claim 4, **characterised in that** the cage (21, 21') is constructed as a thin disc which for reception of the balls (19, 20; 19', 20') has circular holes, the diameter of which is greater than the ball diameter, wherein short spring elements (29, 30; 29', 30') oriented to be opposite in radial direction are formed on at the hole edges which support the balls, and wherein the cage (21, 21') is held in stationary position in one of the mutually opposite support or intermediate plates.

7. Screw gear according to claim 5, **characterised in that** the cage (21, 21') is so constructed that its centring edges (22) effect a limitation of the transverse movement in order to prevent contact of the intermediate plate (9) or the support plates (6, 8) with the spindle (1) and the spring pressure elements (13, 16; 13', 16').

8. Screw gear according to claim 5, **characterised in that** the width of the slot is matched to the ball diameter and produces in radial direction a punctiform contact with the balls (19, 20; 19', 20').

9. Screw gear according to claim 4, **characterised in that** the cage (21, 21') is made of a synthetic material with high sliding properties.

10. Screw gear according to claim 1, **characterised in that** for mounting of the balls one of the mutually opposite plates has a linear prismatic groove (17, 17') intersecting the spindle axis and the other of the plates has two linear prismatic grooves (27, 28; 27' 28') extending perpendicularly thereto and at a spacing from the spindle axis.

## Revendications

1. Transmission à vis avec une broche (1) fixée dans la direction axiale avec un axe de broche (1') et un écrou de broche (5) relié à un chariot (7) à entraîner, guidé dans la direction axiale, où est prévue entre l'écrou de broche (5) et le chariot (7) une articulation pour compenser des mouvements transversaux et basculements relatifs entre l'écrou de broche (5) et le chariot (7), qui est réalisé d'une manière symétrique à l'axe de broche (1') et qui présente deux axes d'articulation perpendiculaires l'un à l'autre qui se croisent sur l'axe de broche (1') et qui sont associés, d'une part, au déplacement transversal d'une plaque d'application (6) reliée à l'écrou de broche (5) et, d'autre part, au déplacement transversal d'une plaque d'application (8) reliée au chariot (7) et qui comprend une plaque intermédiaire (9) par laquelle les plaques d'application (6, 8), pour compenser un basculement de leurs axes d'articulation, sont reliées d'une manière pivotante l'une à l'autre, **caractérisée en ce que** les axes d'articulation sont formés chacune par deux billes (19, 20 ; 19', 20') disposées d'une manière alignée sur des côtés opposés de l'axe de broche (1') qui sont logées dans des rainures prismatiques (17, 18 ; 17', 18') opposées les unes aux autres dans les plaques d'application (6, 8) et la plaque intermédiaire (9), et **en ce que** les billes et les plaques s'appliquent les unes aux autres sous la pression d'un ressort (13, 16 ; 13', 16').

2. Transmission à vis selon la revendication 1, **caractérisée en ce que** les rainures prismatiques (17, 18 ; 17', 18') opposées les unes aux autres sont orientées dans le même sens.

3. Transmission à vis selon la revendication 2, **caractérisée en ce que** l'extension longitudinale des rainures prismatiques (17, 18 ; 17', 18') est limitée pour chaque bille (19, 20 ; 19', 20').

4. Transmission à vis selon la revendication 2, **caractérisée en ce que** des rainures prismatiques (17, 18 ; 17', 18') ouvertes des deux côtés sont prévues et que les billes (19, 20 ; 19', 20') sont assurées dans une cage (21 ; 21') à l'encontre d'une sortie latérale.

5. Transmission à vis selon la revendication 4, **caractérisée en ce que** la cage (21 ; 21') est réalisée comme disque mince qui présente des trous oblongs orientés perpendiculairement à la direction des rainures prismatiques pour la réception des billes (19, 20 ; 19', 20') et présente des deux côtés des bords de centrage (22) avec un ergot (23) en vue d'une sécurité à l'encontre d'une rotation, qui s'engagent dans les perçages des plaques d'application et intermédiaire opposées l'une à l'autre, où le bord de centrage s'engage dans le perçage de la plaque intermédiaire (9) avec un jeu radial.

6. Transmission à vis selon la revendication 4, **caractérisée en ce que** la cage (21, 21') est réalisée comme disque mince qui, pour la réception des billes (19, 20 ; 19', 20') présente des trous circulaires dont le diamètre est plus grand que le diamètre des billes, où sont rapportés par formage dans la direction radiale de courts éléments élastiques (29, 30 ; 29', 30') orientés les uns contre les autres aux bords des trous qui supportent les billes, et où la cage (21, 21') est retenue d'une manière fixe dans l'une des plaques d'application ou intermédiaire opposées l'une à l'autre.

7. Transmission à vis selon la revendication 5, **caractérisée en ce que** la cage (21, 21') est réalisée de façon que ses bords de centrage (22) provoquent une limitation du déplacement transversal pour empêcher un contact de la plaque intermédiaire (9) respectivement des plaques d'application (6, 8) avec la broche (1) et les éléments (13, 16 ; 13', 16') sous pression de ressort.

8. Transmission à vis selon la revendication 5, **caractérisée en ce que** la largeur du trou oblong est adaptée au diamètre des billes et produit dans la direction radiale une application par points des billes (19, 20 ; 19', 20').

9. Transmission à vis selon la revendication 4, **caractérisée en ce que** la cage (21, 21') est fabriquée en un matériau synthétique ayant des propriétés de glissement élevées.

10. Transmission à vis selon la revendication 1, **caractérisée en ce que**, pour le logement des billes, l'une des plaques opposées l'une à l'autre présente une rainure prismatique linéaire (17, 17') croisant l'axe de broche et l'autre plaque présente deux rainures prismatiques linéaires (27, 28 ; 27', 28') s'étendant perpendiculairement à celle-ci, s'étendant au loin de l'axe de broche.
